# FASCICULE DE BREVET EUROPEEN

(11) **EP 2 439 103 B1**
(45) Date de publication et mention de la délivrance du brevet: **08.05.2013**
(21) Numéro de dépôt: 11183871.0
(22) Date de dépôt: 04.10.2011
(51) Int. Cl.: B60N 2/48

(54) **Gaine de montage d'un appui-tête sur un dossier de siège de véhicule automobile**
Hülse zur Montage einer Kopfstützte auf der Rückenlehne eines Kraftfahrzeugsitzes
Sheath for installing a headrest on a backrest of an automotive vehicle seat

(30) Priorité: 07.10.2010 FR 1003975
(43) Date de publication de la demande: 11.04.2012
(73) Titulaire: Centre d'Etude et de Recherche pour l'Automobile (CERA), 51100 Reims (FR)
(72) Inventeur: Dauchez, Fernand, 02400 Bezu Saint Germain (FR)
(74) Mandataire: Sayettat, Julien Christian

(56) Documents cités:
- EP-A2- 1 652 723
- DE-C1- 3 636 932
- FR-A1- 2 897 022
- FR-A1- 2 897 803
- FR-A1- 2 932 131

## Description

L'invention concerne une gaine de montage d'un appui-tête sur un dossier de siège de véhicule automobile, un dispositif de montage comprenant une telle gaine et un siège comprenant une telle gaine (cf. par exemple EP 1 652 723 A2, correspondant au préambule de la revendication 1).

Il est connu de réaliser une gaine - notamment à base de matériau plastique moulé - de montage d'un appui-tête sur un dossier de siège de véhicule automobile, ladite gaine étant destinée à recevoir une tige en coulissement en contact serrant, ceci notamment afin d'éviter les vibrations de ladite tige contre ladite gaine, ladite gaine comprenant un conduit rectiligne débouchant de section analogue à celle de ladite tige, ledit conduit présentant une pluralité de zones d'appui de ladite tige une fois introduite dans ledit conduit, ceci afin de réaliser le contact attendu.

Il est aussi connu d'utiliser, selon l'architecture de siège envisagée, soit une tige droite soit une tige présentant un légère courbure vers l'avant, permettant de conserver à l'appui-tête - malgré le fait que le dossier présente une légère inclinaison vers l'arrière en position usuelle d'utilisation - une position longitudinale sensiblement constante lorsqu'on fait coulisser l'appui-tête vers le haut pour le régler pour un passager de grande taille.

Par ailleurs, le document FR 2 932 131 A1 décrit une gaine de montage pareille comportant un conduit du genre défini ci-dessus et comprenant en outre un ergot disposé du même côté que la fenêtre correspondante, rendue aveugle par une pellicule issue de matière du conduit.

Pour une gamme donnée de sièges, sur lesquels il est prévu de monter des tiges soit droites soit courbes, il est nécessaire de prévoir deux types de gaines adaptées respectivement à chaque type de tige, ce qui nuit à la standardisation que l'on cherche à obtenir sur les composants de sièges.

L'invention a pour but de pallier cet inconvénient.

A cet effet, et selon un premier aspect, l'invention propose une gaine de montage d'un appui-tête sur un dossier de siège de véhicule automobile, ladite gaine étant destinée à recevoir une tige en coulissement en contact serrant, ladite gaine comprenant un conduit rectiligne débouchant de section analogue à celle de ladite tige, ledit conduit comprenant :
- une fenêtre délimitée axialement par une bordure supérieure et une bordure inférieure,
- une bordure supérieure et une bordure inférieure disposées axialement l'une par rapport à l'autre et radialement en regard de ladite fenêtre, ladite gaine étant caractérisée en ce que ledit conduit comprend en outre un ergot issu de la face interne dudit conduit, ledit ergot étant disposé radialement en regard de ladite fenêtre,
lesdites bordures de conduit, lesdites bordures de fenêtre et ledit ergot étant agencés de manière à pouvoir former zones d'appui de ladite tige une fois introduite dans ledit conduit.

Dans cette description, les termes de positionnement dans l'espace (haut, longitudinal, arrière, inférieur, supérieur, ...) sont pris en référence à la gaine disposée dans le véhicule, le siège étant en position d'utilisation par un passager.

Les termes « axialement » et « radialement » s'entendent en référence à l'axe du conduit.

Le terme « bordure » désigne une zone pouvant présenter une certaine étendue axiale et non être limitée à une simple ligne de contact.

L'agencement proposé permet, comme on l'explicitera par la suite, de bénéficier d'une gaine susceptible de recevoir indifféremment une tige droite ou une tige courbe en contact serrant.

Selon d'autres aspects, l'invention propose un dispositif de montage comprenant une telle gaine et un siège comprenant une telle gaine.

D'autres particularités et avantages de l'invention apparaîtront dans la description qui suit, faite en référence aux figures jointes dans lesquelles :
- la figure 1 présente une coupe axiale partielle d'un dispositif selon une réalisation de gaine, ledit dispositif comprenant une tige droite, ledit dispositif étant monté dans un élément de dossier de siège,
- la figure 2 présente un dispositif analogue à celui de la figure 1 avec une tige courbe.

En référence aux figures, on décrit une gaine 1 - notamment à base de matériau plastique moulé - de montage d'un appui-tête sur un dossier de siège de véhicule automobile, non représentés, ladite gaine étant destinée à recevoir une tige 2a,2b - notamment une tige droite 2a ou une tige courbe 2b - en coulissement en contact serrant, ladite gaine comprenant un conduit 3 rectiligne débouchant de section analogue à celle de ladite tige, ledit conduit comprenant :
- une fenêtre 4 délimitée axialement par une bordure supérieure 5 et une bordure inférieure 6,
- une bordure supérieure 7 et une bordure inférieure 8 disposées axialement l'une par rapport à l'autre et radialement en regard de ladite fenêtre,
- un ergot 9 issu de la face interne 10 dudit conduit, ledit ergot étant disposé radialement en regard de ladite fenêtre,
lesdites bordures de conduit, lesdites bordures de fenêtre et ledit ergot étant agencés de manière à pouvoir former chacune une zone d'appui de ladite tige une fois introduite dans ledit conduit.

La gaine 1 est ici emboîtée dans un élément de dossier en forme de douille 13, ladite douille étant intégrée à l'armature dudit dossier.

On verra dans la suite de cette description quelles sont les zones d'appui utilisées en fonction de la nature de la tige 2a,2b introduite dans la gaine 1.

Selon une variante de réalisation non représentée, la fenêtre 4 est en tout ou partie aveugle, ladite fenêtre étant obstruée par une pellicule, pouvant présenter une légère aptitude à la déformation, de manière à permettre un léger débattement radial d'une tige 2b courbe vers l'extérieur, comme on le verra plus loin.

Selon la réalisation représentée, l'ergot 9 est sensiblement à équidistance des bordures 5,6 de fenêtre, pour une raison explicitée plus loin.

Selon la réalisation représentée, le conduit 3 est prolongé par un embout 11 débouchant passant de la section dudit conduit à une section agrandie en sortie dudit embout, de manière à présenter une forme d'entonnoir permettant un débattement radial vers l'extérieur d'une tige 2b courbe, comme on le verra plus loin.

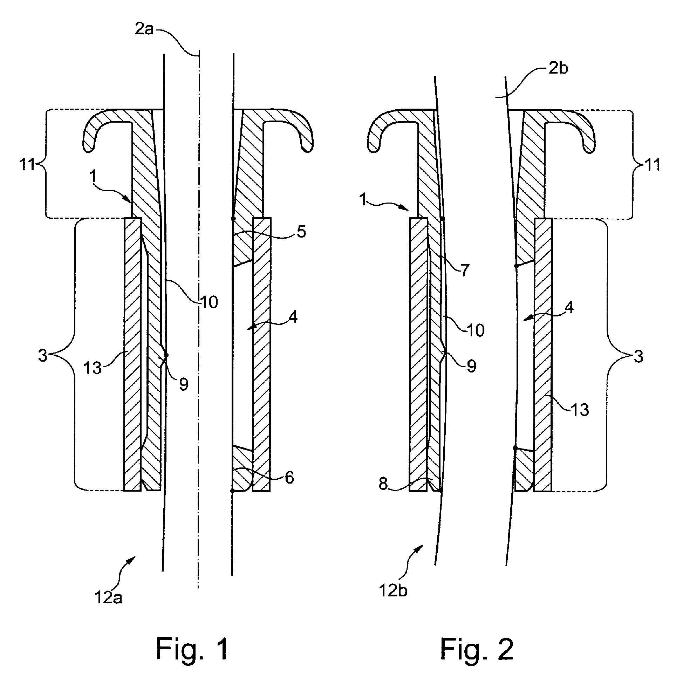

On décrit à présent, en référence à la figure 1, un dispositif 12a de montage d'un appui-tête de siège de véhicule automobile, ledit dispositif comprenant une gaine 1 telle que décrite précédemment et une tige 2a droite disposée dans ladite gaine, ladite tige étant agencée de manière à être en appui sur l'ergot 9 et sur les bordures inférieure 6 et supérieure 5 de fenêtre.

On réalise ainsi un « appui trois zones » garantissant un contact serrant de la tige 2a.

Le fait de prévoir un ergot 9 sensiblement à équidistance des bordures 5,6 de fenêtre, comme décrit précédemment, permet un contact serrant optimal dans le cas d'une telle tige 2a droite.

On décrit à présent, en référence à la figure 2, un dispositif 12b de montage d'un appui-tête de siège de véhicule automobile, ledit dispositif comprenant une gaine 1 telle que décrite précédemment et une tige 2b courbe disposée dans ladite gaine, ladite tige étant agencée de manière à être en appui sur les bordures supérieure 7 et inférieure 8 de conduit et sur au moins une des bordures 5,6 de fenêtre, de manière à créer un « appui trois zones » tel qu'évoqué précédemment.

Dans le cas, non représenté, d'une fenêtre 4 en tout ou partie aveugle, on comprend que la pellicule doive présenter une légère souplesse pour pouvoir se déformer sous la pression de la tige 2b qui est radialement légèrement saillante de la face interne 10 du conduit 3 en regard de ladite fenêtre.

De même, l'embout 11 « en forme d'entonnoir » permet un débattement radial vers l'extérieur de la tige 2b.

On décrit enfin un siège de véhicule automobile, non représenté, comprenant une gaine 1 telle que décrite précédemment, ladite gaine étant montée en haut de dossier dudit siège de manière à pouvoir recevoir en coulissement une tige 2a,2b intégrée à un appui tête.

## Revendications

1. Gaine (1) de montage d'un appui-tête sur un dossier de siège de véhicule automobile, ladite gaine étant destinée à recevoir une tige (2a,2b) en coulissement en contact serrant, ladite gaine comprenant un conduit (3) rectiligne débouchant de section analogue à celle de ladite tige, ledit conduit comprenant :
• une fenêtre (4) délimitée axialement par une bordure supérieure (5) et une bordure inférieure (6),
• une bordure supérieure (7) et une bordure inférieure (8) disposées axialement l'une par rapport à l'autre et radialement en regard de ladite fenêtre, ladite gaine (1) étant **caractérisée en ce que** ledit conduit (3) comprend en outre un ergot (9) issu de la face interne (10) dudit conduit, ledit ergot étant disposé radialement en regard de ladite fenêtre,
lesdites bordures (7, 8) de conduit, lesdites bordures (5, 6) de fenêtre et ledit ergot (9) étant agencés de manière à pouvoir former zones d'appui de ladite tige (2a, 2b) une fois introduite dans ledit conduit.

2. Gaine selon la revendication 1, **caractérisée en ce que** la fenêtre (4) est en tout ou partie aveugle, ladite fenêtre étant obstruée par une pellicule issue de matière du conduit (3).

3. Gaine selon la revendication 1 ou 2, **caractérisée en ce que** l'ergot (9) est sensiblement à équidistance des bordures (5,6) de fenêtre.

4. Gaine selon l'une quelconque des revendications 1 à 4, **caractérisée en ce que** le conduit (3) est prolongé par un embout (11) débouchant passant de la section dudit conduit à une section agrandie en sortie dudit embout.

5. Dispositif de montage d'un appui-tête de siège de véhicule automobile, ledit dispositif comprenant une gaine selon l'une quelconque des revendications 1 à 4 et une tige (2a) droite disposée dans ladite gaine, ladite tige étant agencée de manière à être en appui sur l'ergot (9) et sur les bordures inférieure (6) et supérieure (5) de fenêtre.

6. Dispositif de montage d'un appui-tête de siège de véhicule automobile, ledit dispositif comprenant une gaine selon l'une quelconque des revendications 1 à 4 et une tige (2b) courbe disposée dans ladite gaine, ladite tige étant agencée de manière à être en appui sur les bordures supérieure (7) et inférieure (8) de conduit et sur au moins une des bordures (5,6) de fenêtre.

7. Siège de véhicule automobile comprenant une gaine selon l'une quelconque des revendications 1 à 4, ladite gaine étant montée en haut de dossier dudit siège de manière à pouvoir recevoir en coulissement une tige (2a,2b) intégrée à un appui tête.

## Patentansprüche

1. Hülle (1) zur Montage einer Kopfstütze auf einer Rückenlehne eines Kraftfahrzeugsitzes, wobei die besagte Hülle dazu bestimmt ist, einen Stift (2a, 2b) gleitend in klemmendem Kontakt aufzunehmen, und die besagte Hülle einen geradlinigen durchgehenden Kanal (3) umfasst, dessen Querschnitt jenem des besagten Stiftes entspricht, und der besagte Kanal folgendes umfasst:
- eine Aussparung (4), die axial durch einen oberen Rand (5) und einen unteren Rand (6) begrenzt wird,
- einen oberen Rand (7) und einen unteren Rand (8), die axial zueinander und radial gegenüber der besagten Aussparung angeordnet sind, und die besagte Hülle (1) **dadurch gekennzeichnet ist, dass** der besagte Kanal (3) darüber hinaus einen Zapfen (9) umfasst, der aus der Innenseite (10) des besagten Kanals hervorsteht, und der besagte Zapfen radial gegenüber der besagten Aussparung angeordnet ist, und die besagten Ränder (7, 8) des Kanals, die besagten Ränder (5, 6) der Aussparung und der besagte Zapfen (9) so angeordnet sind, dass sie Auflagezonen für den besagten Stift (2a, 2b) bilden, sobald dieser in den besagten Kanal eingeführt ist.

2. Hülle nach Anspruch 1, **dadurch gekennzeichnet, dass** die Aussparung (4) vollkommen oder teilweise blind ist, und die besagte Aussparung durch eine Schicht verstopft wird, die aus dem Material des Kanals (3) hervorgeht.

3. Hülle nach Anspruch 1 oder 2, **dadurch gekennzeichnet, dass** der Zapfen (9) in etwa gleich weit von den Rändern (5, 6) der Aussparung entfernt ist.

4. Hülle nach irgendeinem der Ansprüche 1 bis 4, **dadurch gekennzeichnet, dass** der Kanal (3) durch einen durchgehenden Ansatz (11) verlängert wird, der vom Querschnitt des besagten Kanals auf einen vergrößerten Querschnitt am Ausgang des besagten Ansatzes übergeht.

5. Vorrichtung zur Montage einer Kopfstütze eines Kraftfahrzeugsitzes, wobei die besagte Vorrichtung eine Hülle nach irgendeinem der Ansprüche 1 bis 4 umfasst, und einen geraden Stift (2a), der in der besagten Hülle angeordnet ist, und die besagte Stange so angeordnet ist, dass sie am Zapfen (9) und am unteren (6) und oberen (5) Rand der Aussparung anliegt.

6. Vorrichtung zur Montage einer Kopfstütze eines Kraftfahrzeugsitzes, wobei die besagte Vorrichtung eine Hülle nach irgendeinem der Ansprüche 1 bis 4 umfasst, und einen gekrümmten Stift (2b), der in der besagten Hülle angeordnet ist, und die besagte Stange so angeordnet ist, dass sie am oberen (7) und unteren (8) Rand des Kanals und an zumindest einem der Ränder (5, 6) der Aussparung anliegt.

7. Kraftfahrzeugsitz umfassend eine Hülle nach irgendeinem der Ansprüche 1 bis 4, wobei die besagte Hülle oben an der Rückenlehne des besagten Sitzes montiert wird, sodass sie einen Stift (2a, 2b) gleitend aufnehmen kann, der in eine Kopfstütze integriert ist.

## Claims

1. Sheath (1) for mounting a headrest on a motor vehicle seat backrest, said sheath being intended to receive a rod (2a, 2b) sliding in tight contact, said sheath comprising an emerging rectilinear tube (3) with a cross section similar to that of said rod, said tube comprising:
- a window (4) delimited axially by a top rim (5) and a bottom rim (6),
- a top rim (7) and a bottom rim (8) disposed axially with respect to each other and radially opposite said window, said sheath (1) being **characterised in that** said tube (3) also comprises a lug (9) issuing from the internal face (10) of said tube, said lug being disposed radially opposite said window,
said tube rims (7, 8), said window rims (5, 6) and said lug (9) being arranged so as to be able to form support zones for said rod (2a, 2b) once introduced into said tube.

2. Sheath according to claim 1, **characterised in that** the window (4) is wholly or partly blind, said window being obstructed by a film made in one piece with the tube (3).

3. Sheath according to claim 1 or 2, **characterised in that** the lug (9) is substantially at equal distances from the window rims (5, 6).

4. Sheath according to any one of claims 1 to 4, **characterised in that** the tube (3) is extended by an emerging end piece (11) changing from the cross section of said tube to an enlarged cross section at the exit from said end piece.

5. Device for mounting a motor vehicle seat headrest, said device comprising a sheath according to any one of claims 1 to 4 and a straight rod (2a) disposed in said sheath, said rod being arranged so as to be in abutment on the lug (9) and on the bottom (6) and top (5) window rims.

6. Device for mounting a motor vehicle seat headrest, said device comprising a sheath according to any one of claims 1 to 4 and a curved rod (2b) disposed in said sheath, said rod being arranged so as to be in abutment on the top (7) and bottom (8) tube rims and on at least one of the window rims (5, 6).

7. Motor vehicle seat comprising a sheath according to any one of claims 1 to 4, said sheath being mounted at the top of the backrest of said seat so as to be able to slidingly receive a rod (2a, 2b) integrated in a headrest.
